Europäisches Patentamt

European Patent Office

Office européen des brevets

(19)

(11) Veröffentlichungsnummer: **0 261 134**
**B1**

(12) **EUROPÄISCHE PATENTSCHRIFT**

(45) Veröffentlichungstag der Patentschrift: **23.01.91**

(21) Anmeldenummer: **86906289.3**

(22) Anmeldetag: **06.11.86**

(86) Internationale Anmeldenummer:
**PCT/DE86/00451**

(87) Internationale Veröffentlichungsnummer:
**WO 87/05662 24.09.87 Gazette 87/21**

(51) Int. Cl.⁵: **F 02 D 41/20, H 01 H 47/32,
H 03 K 17/64**

(54) **VERFAHREN ZUR STEUERUNG DER ENTREGUNGSZEIT VON ELEKTROMAGNETISCHEN EINRICHTUNGEN, INSBESONDERE VON ELEKTROMAGNETISCHEN VENTILEN BEI BRENNKRAFTMASCHINEN.**

(30) Priorität: **21.03.86 DE 3609599**

(43) Veröffentlichungstag der Anmeldung:
**30.03.88 Patentblatt 88/13**

(45) Bekanntmachung des Hinweises auf die
Patenterteilung:
**23.01.91 Patentblatt 91/04**

(84) Benannte Vertragsstaaten:
**DE FR GB**

(56) Entgegenhaltungen:
**FR-A-2 248 457
GB-A-2 025 183
US-A-3 982 505
US-A-4 112 477**

(73) Patentinhaber: **ROBERT BOSCH GMBH
Postfach 50
D-7000 Stuttgart 1 (DE)**

(72) Erfinder: **LINDER, Ernst
Uhlandstr. 24
D-7130 Mühlacker (DE)**
Erfinder: **REMBOLD, Helmut
Öhringerstr. 27
D-7000 Stuttgart 40 (DE)**
Erfinder: **TEEGEN, Walter
Im Raisger 4
D-7050 Waiblingen (DE)**

## Beschreibung

### Stand der Technik

Bei elektromagnetischen Einrichtungen, wie beispielsweise schnell schaltenden Magnetventilen, die für die Steuerung von Dieseleinspritzpumpen verwendet, ist es notwendig, den Öffnungs- und Schließzeitpunkt sowie das Öffnungsende der Ventilnadel möglichst genau einzuhalten, um die Menge des zugeführten Kraftstoffs möglichst präzise zu bestimmen. Zur Erzielung besonders kurzer Abschaltzeiten (Öffnen) wird dabei der Erregungsstrom der elektromagnetisch betätigten Ventils ausgehend vom Haltestromwert möglichst schnell abgesenkt (US—A—3 982 505) und zur Überwindung das nachteiligen magnetischen Klebens sogar kurzzeitig in den negativen Bereich hinein zwangsgesteuert. Die Erkennung des Schließzeitpunktes aus dem Strom- und/oder Spannungsverlauf am erregten Ventil ist relativ einfach, daß in diesem Fall eine große Geschwindigkeitsänderung der Ventilnadel mit relativ kleinem Luftspalt und starker Erregung des Magnetkreises auftritt, aus der eine sicher auswertbare Induktionsänderung resultiert. Die Auswertung des Öffnungsvorgangs ist demgegenüber wesentlich unsicherer, da ein Anschlag bei großem Luftspalt erfolgt und die Erregung wegen des Stromabbaues wesentlich geringer ist. Bei sehr schnell schaltenden Ventilen ist der Erregungsstrom vielfach bereits vor der einsetzenden Nadelbewegung oder spätestens während derselben auf Null abgebaut, sa daß eine Auswertung des Öffnungsvorgangs anhand charakteristischer Strom- oder Spannungswerte überhaupt nicht mehr möglich ist.

Aus FR—A—2 248 457 ist ein Verfahren zum Testen von elektromagnetischen Einspritzventilen bekannt, bei dem das signal des Stroms durch eine Magnetspule des Einspritzventils differenziert und der differenzierte Wert zum Zwecke der Erkennung von Düsennadelbewegungsbeginn bzw. -ende mit vorgegebenen Schwellwerten verglichen wird.

### Vorteile der Erfindung

Das erfindungsgemäße Verfahren mit den kennzeichnenden Merkmalen des Anspruchs 1 hat demgegenüber den Vorteil, daß auch das Abschaltverhalten der elektromagnetischen Einrichtung anhand des charakteristischen Strom- bzw. Spannungsverlaufs auf einfache Weise feststellbar ist, indem der Erregungsstrom der elektromagnetischen Einrichtung zumindest zeitweilig auf einen unterhalb des Haltestromniveaus liegenden niedrigeren, jedoch positiven Wert abgesenkt wird innerhalb der Dauer des vorgesehenen Zeitabschnittes, so daß die Funktionsabläufe der Brennkraftmaschine auch präziser steuerbar sind.

Bei einem eine Ventilnadel umfassenden Ventil einer Brennkraftmaschine als elektromagnetische Einrichtung wird dabei besonders vorteilhaft der erregungsstrom des elektromagnetischen Ventils für die Dauer einer Ausschalttotzeit auf einen niedrigeren Wert abgesenkt, wobei als Ausschalttotzeit die Zeitdauer zwischen der Ausschaltimpulsflanke und dem Öffnungsbeginn der Ventilnadel des Ventils definiert ist.

Bei einem Verfahren zur Regelung einer elektromagnetischen Einrichtung, die im geschlossenen Zustand von einem Erregungsstrom erregt wird und im offenen Zustand stromlos ist, bei der der Erregungsstrom ausgehend von einem dem Haltestrom entsprechenden hohen Wert innerhalb der Dauer eines für die Öffnung der Einrichtung vorgesehenen Zeitabschnitts, der auch das Ende der Öffnung umfaßt, auf Null abgesenkt wird, bei der der Erregungsstrom bzw. ein von diesem Erregungsstrom abhängiges Signal erfaßt und zur Gewinnung eines Regelsignals mit einem das Öffnungsende charakterisierenden Istwert verglichen wird, wird vorteilhaft der Erregungsstrom innerhalb der Dauer des vorgesehenen Zeitabschnittes wieder auf einen höheren, jedoch unterhalb des Haltestroms liegenden, positiven Erregungstromwert angehoben.

Bei dem erstgenannten Verfahren wird der Erregungsstrom ausgehend vom Niveau des Haltestroms vorteilhaft zunächst auf einen niedrigen positiven Wert abgesenkt und in einem zweiten Zeitabschnitt im wesentlichen auf diesem Niveau gehalten, anschließend abgesenkt und während eines vierten Zeitabschnitts wieder auf einen unterhalb des Haltestromniveaus liegenden positiven Wert angehoben.

Bei einem eine Ventilnadel umfassenden Ventil einer Brennkraftmaschine als elektromagnetische Einrichtung werden dabei vorteilhaft die mit charakteristischen Punkten der Bewegungskurve der Ventilnadel verknüpften Strom- und/oder Spannungswerte, die beim Ansteuern des elektromagnetischen Ventils mittels einer Endstufe auftreten, einer Auswerteschaltung zugeleitet, die aus den ihr zugeleiteten Strom- und/oder Spannungswerten charakeristische Punkte der Wegekurve der Ventilnadel ermittelt und die ermittelten Werte zum Vergliech mit dort angespeicherten Sollwerten einem Kennfeld zuführt.

Eine besonders vorteilhafte Schaltungsanordnung zur Durchführung des eingangs genannten Verfahrens umfaßt eine elektromagnetische Einrichtung mit Mitteln zur Versorgung der Einrichtung mit einem Erregungsstrom, wobei die Einrichtung im geschlossenen Zustand von einem Erregungsstrom erregt wird und im offenen Zustand stromlos ist und wobei der Erregungsstrom, ausgehend von einem dem Haltestrom entsprechenden hohen Wert, innerhalb der Dauer eines für die Öffnung der Einrichtung vorgesehenen Zeitabschnitts, der auch das Ende der Öffnung umfaßt, sbgesenkt wird, mit Mitteln zur Erfassung des Erregungsstroms und Regelmitteln, mit Vergleichsmitteln zum Vergleich des Erregungsstroms mit einem das Öffnungsende der Einrichtung charakterisierenden Stromwert, wobei die Schaltungsanordnung auch Mittel zur zumindest zeitweiligen Absenkung des Erregungsstroms während des vorgesehenen Zeitabschnitts auf einen unterhalb des Haltestromniveaus liegenden niedrigeren, jedoch positiven Wert umfaßt.

Als elektromagnetische Einrichtung ist bei einem Ausführungsbeispiel der Erfindung ein eine Ventilnadel umfassendes Ventil einer Brennkraftmaschine vorgesehen.

Bei einem weiteren Ausführungsbeispiel der Erfindung umfaßt die Schaltungsanordnung eine elektromagnetische Einrichtung mit Mitteln zur Versorgung der Einrichtung mit einem Erregungsstrom, wobei die Einrichtung im geschlossenen Zustand von einem Erregungsstrom erregt wird un im offenen Zustand stromlos ist und wobei der Erregungsstrom ausgehend von einem dem Haltestrom entsprechenden hohen Wert innerhalb der Dauer eines für die Öffnung der Einrichtung vorgesehenen Zeitabschnitts, der auch das Ende der Öffnung umfaßt, abgesenkt wird, mit Mitteln zur Erfassung des erregungsstroms und Regelmitteln, mit Vergleichsmitteln zum Vergleich des Erregungsstroms mit einem das Öffnungsende der Einrichtung charakterisierenden Stromwert, wobei in der Schaltungsanordnung weiter Mittel zur Absenkung des Erregungsstroms und Mittel zur Anhebung des Erregungsstroms während des vorgesehenen Zeitabschnitts auf einen unterhalb des Haltestromniveaus liegenden Erregungsstromswert vorgesehen sind.

Als elektromagnetische Einrichtung ist dabei ein eine Ventilnadel umfassendes Ventil bei einer Brennkraftmaschine vorgesehen.

Die Schaltungsanordnung ist weiter dadurch vorteilhaft gekennzeichnet, daß sie ein Kennfeld umfaßt, in dem vorgegebene Sollwert charakteristischer Punkte der Wegekurve der Ventilnadel des elektromagnetischen Ventils abgespeichert sind und das abhängig von erfaßten Betriebskenngrößen der Brennkraftmaschine ein Ansteuersignal abgibt, das einer Endstufe zugeführt wird, die das elektromagnetische Ventil erregt, und daß eine Auswerteschaltung vorgesehen ist, die bei Erregung bzw. Entregung des elektromagnetischen Ventils auftretende Strom- und/oder Spannungswerte erfaßt, daraus charakteristische Werte der Wegekurve der Ventilnadel ermittelt und diese zwecks Vergleich mit den abgespeicherten Sollwerten dem Kennfeld zugeleitet.

Besonders vorteilhaft ist in der Schaltungsanordnung die Auswerteschaltung weiter derart mit dem Kennfeld verbunden, daß auch der Auswerteschaltung das vom Kennfeld zur Ansteuerung der Endstufe abgegebene Ansteuersignal zuleitbar ist und zwar derart, daß die Auswerteschaltung vorzugsweise lediglich währens eines vorgebbaren Zeitfensters (Zeitintervall) aktivierbar ist.

Besonders vorteilhalft umfaßt die Schaltungsanordnung einen ersten Filter, der lediglich die Anstiegsflanke des Ansteuerimpulses für das elektromagnetische Ventil zum Nullsetzen an zwei Schmitt-Trigger sowie zwei Zähler leitet und einen zweiten Filter, der lediglich die Abstiegsflanke des Ansteuerimpulses zu einer ersten bistabilen Kippstufe leitet, deren Ausgangssignal einerseits über einen Schalter die Resterregungsspannung and das elektromagnetische Ventil legt, andererseits den ersten Zähler — zur Ermittlung der Zeit — und mittelbar über die zweite bistabile Kippstufe den ersten Zähler — zur Ermittlung der Zeit — startet und schließlich nach Zeitverzögerung über einen Schalter die differenzierten Stromwerte des ekeltromagnetischen Ventils je einem ersten Schwellwertschalter und einem zweiten Schwellwertschalter zuleitet, denen je ein Schmitt-Trigger nachgeschaltet ist, deren Ausgangssignal die erste bistabile Kippstufe bzw. die zweite bistabile Kippstufe zurücksetzen.

In einem weiteren Ausführungsbeispiel umfaßt die Schaltungsanordnung je eine Filterschaltung zur Abtrennung der Anstiegs- bzw. Abstiegsflanke des Ansteuerungsimpulses zur Ansteuerung des elektromagnetischen Ventils, durch je einen Schmitt-Trigger und einen Zähler, denen zum Nullsetzen die vom Filter abgetrennte Anstiegsflanke des Ansteuerimpulses zugeleitet wird, sowie eine von der Abstiegsflanke des Ansteuerimpulses über Filter beaufschlagte bistabile Kippstufe, die zeitverzögert einerseits das elektromagnetische Ventil über einen Schalter mit der Resterregungsspannung und andererseits durch Betätigung eines weiteren Schalters einen vom Schmitt-Trigger gefolgten Schwellwertschalter mit dem differenzierten Strom des Ansteuerungsstroms des elektromagnetischen Ventils beaufschlagt, wobei das Ausgangssignal des Schmitt-Trigger zwecks deren Rücksetzung an den Rücksetzeingang der bistabilen Kippstufe zurückgeführt ist.

Vorteilhaft sind dabei zur Ansteuerung des elektromagnetischen Ventils drei Spannungsquellen mit drei Spannungswerten vorgesehen, wobei die erste Spannungsquelle unmittelbar durch den Ansteuerimpuls und für dessen Dauer über einen ersten Schalter an das elektromagnetische Ventil legbar ist, während zur Verbindung des elektromagnetischen Ventils mit der zweiten Spannungsquelle eine von der Abstiegsflanke des Ansteuerimpulses betätigbare einen zweiten Schalter schließende bistabile Kippstufe vorgesehen ist und wobei zur Anschaltung des elektromagnetischen Ventils an die dritte Spannungsquelle über einen dritten Schalter eine weitere bistabile Kippstufe vorgesehen ist, die nach Rückstellung der ersten bistabilen Kippstufe durch ein Ausgangssignal des auf den Schwellwertschalter folgenden Schmitt-Triggers durch das gleiche jedoch zeitverzögert zugeführte Signal gesetzt wird und dabei den Schalter schließt.

Zeichnungen

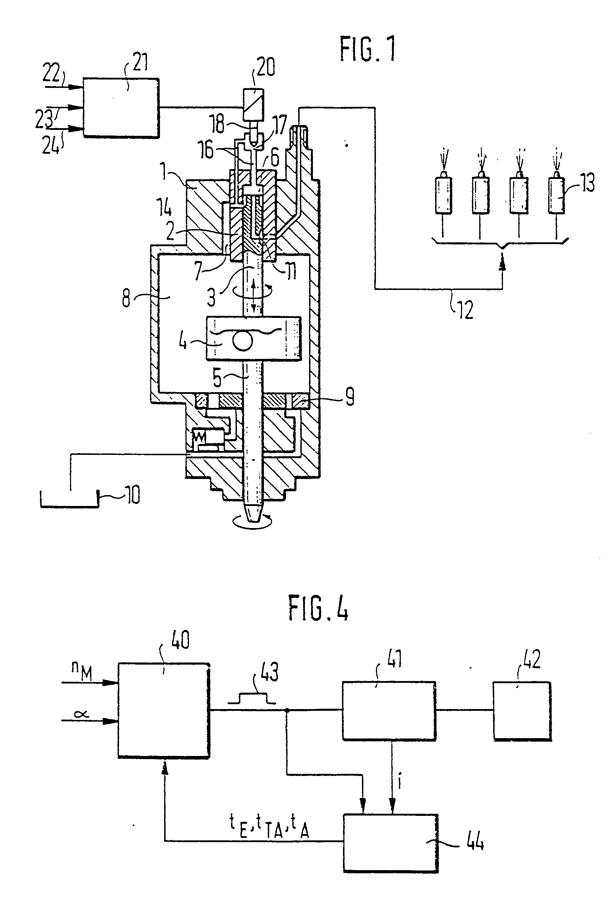

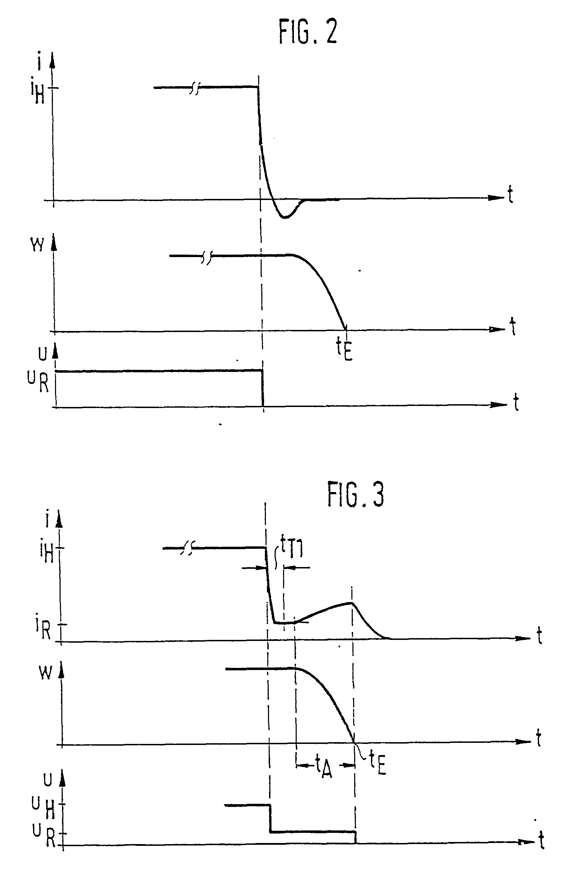

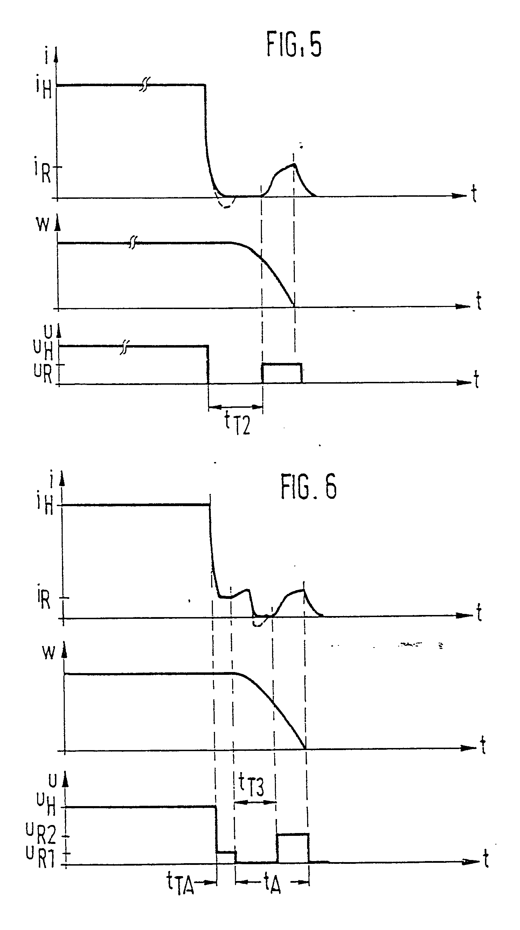

Die Verfahren und zur Durchführung der Verfahren geeignete Schaltungsanordnungen sind anhand der Zeichnungen vereinfacht dargestellt und in der nachfolgenden Beschreibung näher erläutert. Es zeigen Figur 1 eine Kraftstoffeinspritzpumpe in vereinfachter Darstellungsweise, Figur 2 ein Erregungsstrom, Erregungsspannung une Weg der Ventilnadel darstellendes Diagramm bei herkömmlicher Ansteuerung eines Ventils, Figur 3 ein Diagramm, das den Erregungsstrom, den Weg der Ventilnadel und den Verlauf der Erregungsspannung jeweils als Funktion der Zeit bei Anwendung der erfindungsgemäßen Verfahren darstellt, Figur 4 ein Blockschaltbild einer Schaltungsanordnung zur Durchführung der erfindungsgemäßen Verfahren, Figur 5 und Figur 6 weitere Diagramme der im Zusammenhand mit Figur 3 näher bezeichneten Art zur Erläuterung von Weiterbildungen der Erfindung sowie Figur 6, Figur 8 und Figur 9 je eine Schaltungsanordnung zur Durchführung der erfindungsgemäßen Verfahren.

Beschreibung der Ausführungsbeispiele

Bei der in Figur 1 beispielsweise dergestellten Kraftstoffeinspritzpumpe ist in einem Gehäuse 1 eine Buchse 2 angeordnet, in der ein Pumpenkolben 3 eine hin- und hergehende und gleichzeitig rotierende Bewegung ausführt. Der Pumpenkolben 3 ist durch einen Nockentrieb 4 über eine Welle 5 angetrieben, welche synchron zu der Drehzahl der von der Einspritzpumpe mit Kraftstoff versorgten Brennkraftmaschine rotiert. Die Stirnfläche des Pumpenkolbens 3 und die Buchse 2 begrenzen einen Pumpenarbeitsraum 6, der über einen Versorgungskanal 7 mit einem Saugraum 8 im Gehäuse 1 der Kraftstoffeinspritzpumpe verbunden ist. Der Saugraum 8 wird beispielsweise über eine Förderpumpe 9 mit Kraftstoff aus einem Kraftstoffbehälter 10 versorgt. Aus dem Pumpenarbeitsraum 6 wird über eine Längs- und Verteilernut 11 des Pumpenkolbens 3 der Kraftstoff bei entsprechender Drehstellung des Pumpenkolbens 3 zur Druckleitungen 12 verteilt, die über die Buchse 2 und das Gehäuse 1 zu Einspritzdüsen 13 an der Brennkraftmaschine führen. Vom Pumpenarbeitsraum 6 zweigt an einer durch den Pumpenkolben 3 nicht beeinflußbaren Stelle ein Entlastungskanal 16 ab, der andererseits auf die Saugseite des Pumpenkolbens 3 geführt ist und beispielsweise in den Versorgungskanal 7 münder. In dem Entlastungskanal befindet sich ein Ventilsitz 17, mit dem eine Ventilnadel 18 zusammenarbeitet, die als Teil einer elektromagnetisch betätigbaren Steuervorrichtung 20, insbesondere eines elektromagnetischen Ventils dient und den Querschnitt des Entlastungskanal je nach Ansteuerung öffnet oder schließt. Die Ansteuerung der Steuervorrichtung 20 erfolgt durch ein elektronisches Steuergerät 21 in Abhängigkeit von verschiedenen Betriebskenngrößen der Brennkraftmaschine, wie beispielsweise Last 22, Drehzahl 23, Temperatur 24 u.a. Durch die Steuervorrichtung 20 werden in bakannter Weise während des Förderhubs des Pumpenkolbens 3 Beginn und Ende der Kraftstoffzufuhr durch die Kraftstoffpumpe bestimmt. In nicht erregtem Zustand der Steuervorrichtung 20 ist beispielsweise die Ventilnadel 18 vom Ventilsitz abgehoben und damit der Entlastungskanal 16 geöffnet, so daß sich im Pumpenarbeitsraum 6 kein zur Öffnung der Einspritzdüsen 13 ausreichender Druck aufbauen kann. Durch Erregung der Steuervorrichtung 20 wird die Ventilnadel 18 zum Ventilsitz 17 hin bewegt und verschließt diesen. Daraufhin baut sich im Pumpenarbeitsraum 6 ein Druck auf und Kraftstoff gelangt über die Verteilernut 11 zu den Einspritzdüsen 13. Die Entregung des Steuervorrichtung 20 ist gleichbedeutend dem Förderende, da hierdurch der Ventilsitz 17 wieder ganz geöffnet wird un ein Druckabfall im Pumpenarbeitsraum erfolgt.

Die in Figur 2, Figur 3, Figur 5 und Figur 6 dargestellten Diagramme zeigen jeweils ausschnittsweise, d.h. lediglich über einen bestimmten Zeitabschnitt, den zeitlichen Verlauf von Erregerstrom i, Erregerspannung u sowie den Weg w der Ventilnadel 18 des elektromagnetischen Ventils. Das Diagramm nach Figur 2 zeigt diese Größen bei dem herkömmlichen Verfahren zur Steuerung der Entregungszeit. Aus der Darstellung des Stromverlaufs $i=i$ (t) geht deutlich hervor, daß der Erregerstrom zunächst auf einen dem Haltestrom $i_H$ entsprechenden relativ hohen Wert eingestellt ist, dann aber zur Erzielung kurzer Abschaltzeiten (Öffnen) in einem steilen Kurvenverlauf sehr schnell abgebaut und zur Reduzierung des magnetischen Klebens sogar kurzzeitig in den negativen Bereich zwangsgesteuert wird.

Im unteren Teil des Diagramms nach Figur 2 ist die entsprechende Erregerspannung $u=u$ (t) dargestellt. Der mittlere Bereich des Diagramms nach Figur 2 zeigt weiter den Weg der Ventilnadel 18 als Funktion der Zeit t. Ein Vergleich der Stromkurve $i=i$ (t) mit der im mittleren Bereich des Diagramms nach Figur 2 dargestellten Wegekurve läßt deutlich erkennen, daß der Strom i ausgehend vom Haltestrom $i_H$ bereits schon vor dem Öffnungsbeginn der Ventilnadel auf Null abgebaut worden ist. Eine Kontrolle des Öffnungsvorgangs etwa anhand charakteristischer Strom- und/oder Spannungswerte im Bereich des elektromagnetischen Ventils is daher nicht mehr möglich.

Anhand der Diagramme von Figur 3 werden die entsprechenden Kurvenverläufe bei Anwendung des erfindungsgemäßen Verfahrens erläutert. Die Darstellung des Erregerstroms $i=i$ (t) im oberen Bereich von Figur 3 läßt erkennen, daß der Strom 1 ausgehend vom relativ hohen Nivau des Haltestroms $i_H$ in einem steilen Kurvenverlauf sehr stark abgesenkt wird, jedoch nur bis zu einem von Null verschiedenen noch im positiven Bereich liegenden Strom $i_R$, der für eine Zeit $t_{T1}$ aufrechterhalten wird. Der Wert des Stroms $i_R$ wird dabei derart niedrig gewählt, daß die daraus resultierende Magnetkraft geringer ist als die auf die Ventilnadel einwirkende Druckkraft. Aufgrund der durch den Strom $i_R$ vorgegebenen konstanten Resterregung tritt jedoch durch die Gegeninduktion während der Bewegung der Ventilnadel eine entsprechende Stromänderung auf, aus der durch Differenzieren Öffnungsbeginn und -ende auf relativ einfache Weise ermittelt werden könne. Alternativ kann auch bei eingeprägtem Strom die entstehende Spannungsänderung ausgewertet werden. Voraussetzung für die Erkennung des·Öffnungsbeginn der Ventilnadel nach der zuvor beschriebenen Weise ist jedoch weiterhin, daß der Strom i zu diesem Zeitpunkt schon auf das niedrigere Niveau $i_R$ abgebaut worden ist. Dies ist in der Praxis ohne weiteres realisierbar, da der Abbau der Magnetkraft aufgrund des Einflusses von Wirbelströmen dem Stromabbau nur verzögert folgt. Erst nach Erreichen des Öffnungsendes, also nach dem Zeitpunkt $t_E$ wird der Strom i endgültig auf Null abgebaut.

Im unteren Diagramm der Figur 3 ist wiederum der Spannungsverlauf u=u (t) für dieses Ausführungsbeispiel dargestellt.

Das vorbeschriebene erfindungsgemäße Verfahren führt allerdings zu einer geringer Verlängerung der Öffnungszeit, die jedoch in der Praxis ohne weiteres in Kauf genommen werden kann, da durch die präzise Erkennung des Öffnungsverlaufs nach dem erfindungsgemäßen Verfahren auftretende Streuungen und Drifteinflüsse auf einflache Weise kompensiert werden können. Wenn jedoch bei besonders hohen.

Anforderungen an die Präzision gelegentlich auch noch die geringfügige Verlängerung der Öffnungsdauer vermieden werden soll, kann dies auf einfache Weise durch eine vorteilhafte Ausgestaltung der Erfindung erreicht werden. Dies wird anhand der Diagramme von Figur 5 erläutert. Gemäß dem oberen Diagramm der Figur 5 wird der Strom i=i (t) zur Einleitung des Öffnungsvorgangs der Ventilnadel sehr schnell auf Null abgesenkt oder sogar kurzzeitig in den negativen Bereich umgesteuert, um dann wieder, während die Ventilnadel 18 sich schon in Bewegung gesetzt hat, auf einen bestimmten positiven Wert $i_R$ angehoben zu werden. Da die Anhebung des Stroms i auf den Wert $i_R$ zu einem Zeitpunkt erfolgt, in dem die Geschwindigkeit der Ventilnadel und der Luftspalt bereits relativ groß sind, ist der Einfluß dieser Maßnahme auf die Öffnungszeit vernachlässigbar gering. Die präzise Auswertung des Öffnungsendes erfolgt in der zuvor schon beschriebenen Weise. Durch die verzögerte Anhebung der Stroms i auf den Wert $i_R$ kann jetzt eine noch stärkere Resterregung gewählt werden, die wiederum auf vorteilhafte Weise zu einem größeren auswertbaren Nutzsignal führt. In dem letztgenannten Ausführungsbeispiel der Erfindung findet nur eine Auswertung des Öffnungsendes der Ventilnadel statt.

Für den Fall, daß in bestimmten Anwendungsfällen auch noch Wert auf die präzise Auswertung des Öffnungsbeginns der Ventilnadel Wert gelegt wird, bietet sich eine weitere Ausgestaltung des erfindungsgemäßen Verfahrens an, die anhand der Diagramme von Figur 6 erläutert wird.

Der Unterschied zu dem zuvor beschriebenen Ausführungsbeispiel liegt im wesentlichen darin, daß der Strom i=i (t) ausgehend von Niveau des Haltestroms $i_H$ zunächst wie im Ausführungsbeispiel gemäß Figur 3 schnellstmöglich auf einen bestimmten positiven Restwert $i_R$ ebgesenkt, für eine Zeit lang auf diesem Niveau gehalten, danach auf Null oder ins Negative abgesenkt und schließlich wieder auf einen höheren positiven Wert, beispielsweise das Niveau von $i_R$ angehoben wird. Diese Maßnahmen stellen sicher, daß an der Erregerspule der elektromagnetischen Einrichtung Strom- und/oder Spannungsänderungen auftreten, die einer leichten Auswertung zugänglich sind.

Eine Einrichtung zur Durchführung des erfindungsgemäßen Verfahrens ist in Form eines Blockschaltbildes schematisch in Figur 4 dargestellt. Über ein Kennfeld 40 und eine Endstufe 41 erfolgt die Ansteuerung des elektromagnetischen Ventils 42. Über das der Endstufe 41 vom Kennfeld 40 zugeleitete Ansteuersignal 43 wird gleichzeitig eine Answerteschaltung 44 aktiviert, die sowohl die Schließbewegung als auch die Öffnungsbewegung des elektromagnetischen Ventils 42 erfaßt. Entsprechend der positiven oder negativen Flanke des Signals ist entweder die Zuordnung von Schließ- bzw. Öffnungsvorgang möglich. Besonders zweckmäßig ist eine Aktivierung des Auswerteschaltung 44 nur innerhalb eines willkürlich vorgebbaren Zeitfensters, um Störungseinflüsse zu vermindern. Die in der Auswerteschaltung 44 ausgewerteten Größen $t_E$, $t_{TA}$ und $t_A$ werden dem Kennfeld 40 zugeleitet und mit dort angespeicherten Sollwerten verglichen. Bei festgestellten Abweichungen von den Sollwerten wird zur präzisen Bemessung der zugeführten Kraftstoffmenge die Öffnungsdauer des elektromagnetischen Ventils 42 über die Endstufe 41 entsprechend korrigiert. Hierin bedeuten $t_{TA}$ die Ausschalttotzeit, also die Zeitdauer, die von der Ausschaltimpulsflanke bis zum Öffnungsbeginn der Ventilnadel verstreicht; $t_A$ die Ausschaltzeit, also den Zeitablauf von der Ausschaltimpulsflanke bis zum Öffnungsende der Ventilnadel sowie $t_E$ die Einschaltzeit, d.h. die Zeitdauer von der Einschaltimpulsflanke biz zum Schließzeitpunkt der Ventilnadel.

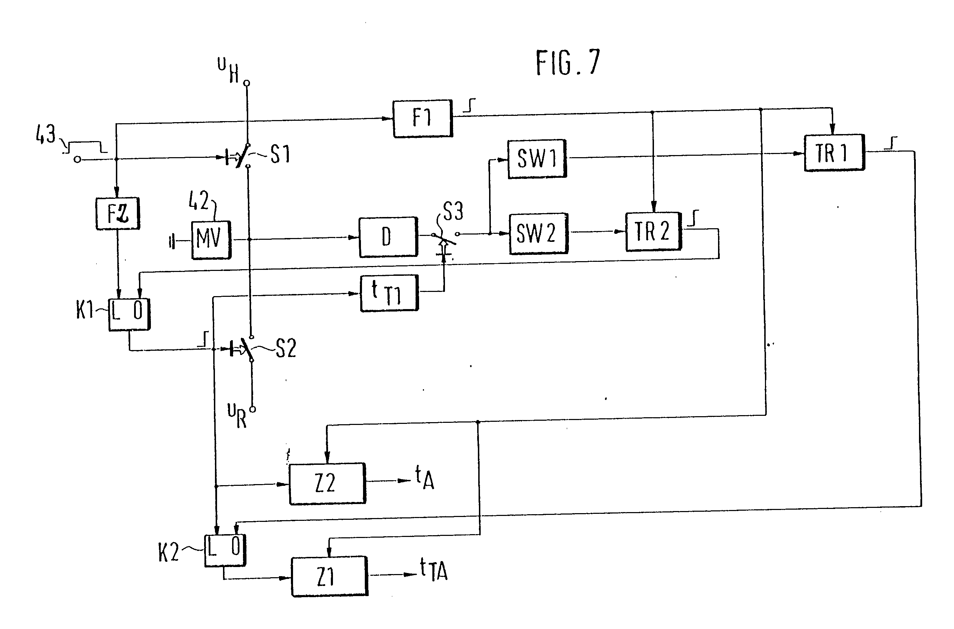

In der Figur 7, Figur 8 und Figur 9 sind Schaltungsanordnungen zur Durchführung des erfindungsgemäßen Verfahrens dargestellt. Die Schaltungsanordnung nach Figur 7 ermöglicht dabei eine Ansteuerung des elektromagnetischen Ventils 42 (MV) entsprechend dem anhand von Figur 3 erläuterten Verfahren. Über den vom Kennfeld 40 abgegebenen Ansteuerimpuls 43 wird der Schalter S1 für die Dauer des Ansteuerimpulses geschlossen. Dadurch wird die Spannung $U_H$ an das elektromagnetische Ventil 42 gelegt, so daß dieses mit dem Haltestrom $i_H$ beaufschlagt wird. Mittels der Anstiegsflanke des Ansteuerimpulses 43 erfolgt gleichzeitig die Nullsetzung der Schmitt-Trigger TR1 und TR2 sowie der Zähler Z1 und Z2. Ein Filter F1 verhindert, daß sich die Abschaltflanke des Ansteuerimpulses 43 auf TR1 und TR2 sowie die Zähler Z1 und Z2 auswirkt. Ein weiteres Filter F2 unterdrückt die Anstiegsflanke des Ansteuerimpulses 43 und läßt nur die Abschaltflanke des Ansteuerimpulses 43 passieren, die die bestabile Kippstufe K1 setzt. Das Ausgangssignal der bistabilen Kippstufe K1 schließt den Schalter S2 und legt die Spannung $u_R$ (Resterregungsspannung) an das elektromagnetische Ventil 42, das jetzt mit dem Resterregungsstrom $i_R$ beaufschlagt wird. Gleichzeitig werden ein Schalter S3 und über eine weitere bistabile Kippstufe K2 die Zähler Z1 und Z2 aktiviert. Schalter S3 spricht dabei erst nach einer vorgebbaren Totzeit $t_{T1}$ an. Diese Totzeit ist so gewählt, daß der Resterregungsstrom $i_R$ nach ihrem Ablauf einen stationären Wert erreicht hat. Über einen Differentiator D wird der das Magnetventil 42 beaufschlagende Strom $i=i$ (t) differenziert. Ein sich daraus ergebender positiven Schwellwert am Schwellwertschalter SW1 aktiviert den Schmitt-Trigger TR1, was zu einem Zurücksetzen der bistabilen Kippstufe K2 und zu einem Stoppen des Zählers Z1 führt. Dieser Zähler Z1 ermittelt die Ausschalttotzeit $t_{TA}$ also die Zeitdauer, die von der Ausschaltimpulsflanke bis zum Öffnungsbeginn der Ventilnadel 18 verstreicht. Wenn aus dem differenzierten Strom des elektromagnetischen Ventils 42 ein negativer Schwellwert am Schwellwertschalter SW2 ansteht, wird der Schmitt-Trigger TR2 aktiviert, der seinerseits die bistabile Kippstufe K1 rücksetzt und dadurch Zähler Z2 stoppt. Zähler Z2 zeigt die Ausschaltzeit $t_A$ an. Gleichzeitig wird Schalter S2 geöffnet und damit das elektromagnetische Ventil 42 entregt.

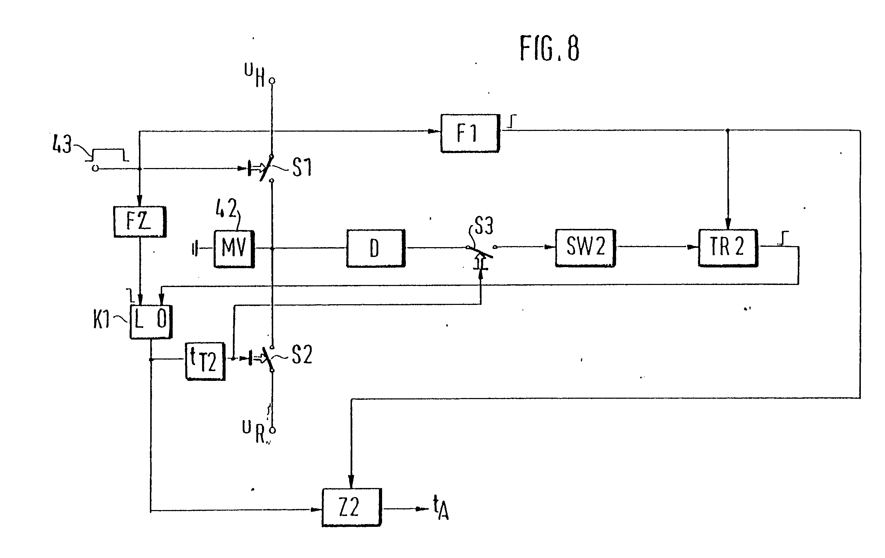

Die Schaltungsanordnung nach Figur 8 ist geeignet zur Durchführung des Verfahrens, das anhand der Diagramme von Figur 5 weiter oben erläutert worden ist. Abweichend zur Wirkungsweise der zuvor beschriebenen Schaltungsanordnung nach Figur 7 wird jetzt nur die Zeit $t_A$ ausgewertet. Die Resterregungsspannung $u_R$ wird über den Schalter S2 dem elektromagnetischen Ventil 42 erst nach Ablauf eines Zeitintervalls $t_{T2}$ zugeführt. Auch der von Differenzierer D differenzierte Strom des elektromagnetischen Ventils 42 wird den Elementen der Auswerteschaltung, nämlich dem Schwellwertschalter SW2, dem Schmitt-Trigger TR2, der bistabilen kippstufe K1 und dem Zähler Z2 über den Schalter 3 erst nach Ablauf der Zeit $t_{T2}$ zugeleitet.

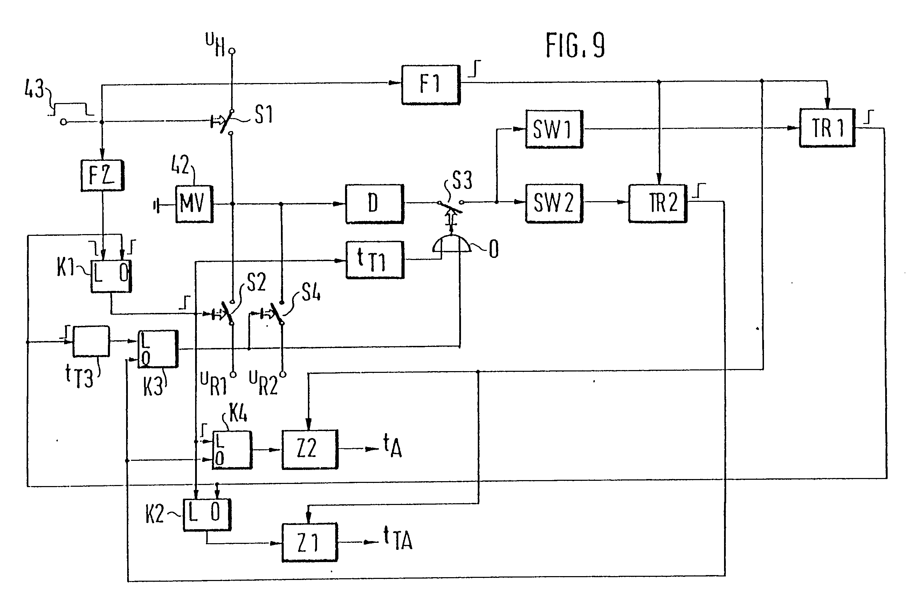

Die Schaltungsanordnung nach Figur 9 ermöglicht die Durchführung des anhand der Diagramme von Figur 6 beschriebenen Verfahrens. Die Bestimmung von $t_{TA}$ verläuft dabei in wesentlichen entsprechend der Schaltungsanordnung gemäß Figur 7. Lediglich das Rücksetzen der bistabilen Kippstufe K1 erfolgt jetzt über den Schmitt-Trigger TR1. Mit dem Rücksetzimpuls wird nach Ablauf einer Verzögerungszeit $t_{T3}$ eine weitere bistabile Kippstufe K3 gesetzt, die über des ODER-Glied 0 Schalter S3 wieder schließt und über Schalter S4 die Resterregungsspannung $U_{R2}$ an das elektromagnetische Ventil 42 legt. Damit bei Abschalten der ersten Resterregungsspannung $u_{R1}$ durch Rücksetzen der bistabilen Kippstufe K1 der Zähler Z2 nicht angehalten wird, ist über eine weitere bistabile Kippstufe K4 eine Entkopplung vorgesehen. Nach dem Ansprechen des Schmitt-Triggers TR2 werden die bistabilen Kippstufen K4 und K3 wieder zurückgesetzt.

## Patentansprüche

1. Verfahren zur Regelung einer elektromagnetischen Einrichtung (18, 20; 42), die im geschlossenen Zustand von einem Erregungsstrom (i) erregt wird und im offenen Zustand stromlos ist, bei der der Erregungsstrom (i) ausgehend von einem dem Haltestrom (iH) entsprechenden hohen Wert innerhalb der Dauer eines für die Öffnung der Einrichtung vorgesehenen Zeitabschnitts, der auch das Ende der Öffnung umfaßt, abgesenkt wird, bei der der Erregungsstrom (i) bzw. ein von diesem Erregungsstrom (i) abhängiges Signal erfaßt und zur Gewinnung eines Regelsignals mit einem das Öffnungsende charakterisierenden Istwert verglichen wird, dadurch gekennzeichnet, daß der Erregungsstrom (i) innerhalb der Dauer des vorgesehenen Zeitabschnittes zumindest während des Endes der Öffnung ($t_E$) auf einen unterhalb des Haltestromniveaus liegenden niedrigeren, jedoch positiven Wert abgesenkt wird.

2. Verfahren nach Anspruch 1 mit einem Ventilnadel umfassenden Ventil einer Brennkraftmaschine als elektromagnetische Einrichtung, dadurch gekennzeichnet, daß der Erregungsstrom (i) des elektromagnetischen Ventils (18, 20; 42) für die Dauer einer Ausschalttotzeit (tTA) auf einen niedrigeren Wert (iR) abgesenkt wird, wobei als Ausschalttotzeit die Zeitdauer zwischen der Ausschaltimpulsflanke und dem Öffnungsbeginn der Ventilnadel des Ventils definiert ist.

3. Verfahren zur Regelung einer elektromagnetischen Einrichtung, die im geschlossenen Zustand von einem Erregungsstrom (i) erregt wird und im offenen Zustand stromlos ist, bei der der Erregungsstrom (i) ausgehend von einem dem Haltestrom (iH) entsprechenden hohen Wert innerhalb der Dauer eines für die Öffnung der Einrichtung vorgesehenen Zeitabschnitts, der auch das Ende der Öffnung umfaßt, auf Null abgesenkt wird, bei der der Erregungsstrom (i) bzw. ein von diesem Erregungsstrom (i) abhängiges Signal erfaßt und zur Gewinnung eines Regelsignals mit einem das Öffnungsende charakterisierenden Istwert verglichen wird, dadurch gekennzeichnet, daß der Erregungsstrom (i) innerhalb der Dauer des vorgesehenen Zeitabschnittes zumindest während des Endes der Öffnung ($t_E$) wieder auf einen höheren, jedoch unterhalb des Haltestroms (iH) liegenden, positiven Erregungsstromwert (iR) angehoben wird.

4. Verfahren nach einem der Ansprüche 1 und 2, dadurch gekennzeichnet, daß der Erregungsstrom (i) ausgehend vom Niveau des Haltestroms (iH) zunächst auf einen niedrigen positiven Wert (iR) abgesenkt und in einem zweiten Zeitabschnitt in wesentlichen auf diesem Niveau gehalten, anschließend abgesenkt und währens eines vierten Zeitabschnitts wieder auf einen unterhalb des Haltestromniveaus (iH) liegenden positiven Wert angehoben wird.

5. Verfahren nach einem der Ansprüche 1 bis 4 mit einem eine Ventilnadel umfassenden Ventil einer Brennkraftmaschine als elektromagnetische Einrichtung, dadurch gekennzeichnet, daß die mit charakteristischen Punkten der Bewegungskurve ($w=w$ (t)) der Ventilnadel (18) verknüpften Strom-und/oder Spannungswerte (i, U), die beim Ansteuern des elektromagnetischen Ventils (18, 20; 42) mittels einer Endstufe (41) auftreten, einer Auswerteschaltung (44) zugeleitet werden, die aus den ihr zugeleiteten Strom- und/oder Spannungswerten (i, U) charakteristische Punkte der Wegekurve ($w=w$ (t)) der Ventilnadel (18) ermittelt und die ermittelten Werte zum Vergleich mit dort abgespeicherten Sollwerten einem Kennfeld (40) zuführt.

6. Schaltungsanordnung zur Durchführung des Verfahrens nach einem der Ansprüche 1 bis 2, mit einer elektromagnetischen einrichtung mit Mitteln zur Versorgung der Einrichtung mit einem Erregungsstrom, wobei die Einrichtung im geschlossenen Zustand von einem Erregungsstrom (i) erregt wird und im offenen Zustand stromlos ist und wobei der Erregungsstrom (i), ausgehend von einem dem Haltestrom (iH) entsprechenden hohen Wert, innerhalb der Dauer eines für die Öffnung der Einrichtung vorgesehenen Zeitabschnitts, der auch das Ende der Öffnung umfaßt, abgesenkt wird, mit Mitteln zur Erfassung des Erregungsstroms und Regelmitteln, mit Vergleichsmitteln zum Vergleich des Erregungsstroms mit einem das Öffnungsende der Einrichtung charakterisierenden Stromwert, dadurch gekennzeichnet, daß die Schaltungsanordnung Mittel zur zumindest zeitweiligen Absenkung des Erregungsstroms (i) während des vorgesehenen Zeitabschnitts zumindest während des Endes der Öffnung ($t_E$) auf einen unterhalb des Haltestromniveaus (iH) liegenden niedrigeren, jedoch positiven Wert umfaßt.

7. Schaltungsanordnung nach Anspruch 6, dadurch gekennzeichnet, daß als elektromagnetische Einrichtung ein eine Ventilnadel umfassendes Ventil einer Brennkraftmaschine vorgesehen ist.

8. Schaltungsanordnung zur Durchführung des Verfahrens nach einem der Ansprüche 3 bis 5, mit einer elektromagnetischen Einrichtung mit Mitteln zur Versorgung der Einrichtung mit einem Erregungsstrom, wobei die Einrichtung im geschlossenen Zustand von einem Erregungsstrom (i) erregt wird und im offenen Zustand stromlos ist und wobei der Erregungsstrom (i) ausgehend von einem dem Haltestrom (iH) entsprechenden hohen Wert innerhalb der Dauer eines für die Öffnung der Einrichtung vorgesehenen Zeitabschnitts, der auch das Ende der Öffnung umfaßt, abgesenkt wird, mit Mitteln zur Erfassung des Erregungsstroms und Regelmitteln, mit Vergleichsmitteln zum Vergleich des Erregungsstroms mit einem das Öffnungsende der Einrichtung charakterisierenden Stromwert, wobei die Schaltungsanordnung Mittel zur Absenkung der Erregungsstroms (i) umfaßt, dadurch gekennzeichnet, daß sie Mittel zur Anhebung des Erregungsstroms (i) während des vorgesehenen Zeitabschnitts zumindest während des Endes der Öffnung ($t_E$) auf einen unterhalb des Haltestromniveaus (iH) liegenden Erregungsstromwert (iR) umfaßt.

9. Schaltungsanordnung nach Anspruch 8, dadurch gekennzeichnet, daß als elektromagnetische Einrichtung ein eine Ventilnadel umfassendes Ventil bei einer Brennkraftmaschine vorgesehen ist.

10. Schaltungsanordnung nach einem der Ansprüche 7 oder 8, dadurch gekennzeichnet, daß sie ein Kennfeld (40) umfaßt, in dem vorgegebene Sollwerte charakteristischer Punkte der Wegekurve ($w=w$ (t)) der Ventilnadel (18) des elektromagnetischen Ventils (18, 20; 42) abgespeichert sind und das abhängig von erfaßten Betriebskenngrößen ($n_M$, $\alpha$) der Brennkraftmaschine ein Ansteuersignal (43) abgibt, das einer Endstufe (41) zugeführt wird, die das elektromagnetische Ventil (18, 20; 42) erregt, und daß eine Answerteschaltung (44) vorgesehen ist, die bei Erregung bzw. Entregung des elektromagnetischen Ventils (18, 20; 42) auftretende Strom- und/oder Spannungswerte (i, U) erfaßt, daraus charakteristische Werte der Wegekurve der Ventilnadel (18) ermittelt und diese zwecks Vergleich mit den abgespeicherten Sollwerten dem Kennfeld (40) zuleitet.

11. Schaltungsanordnung nach Anspruch 10, dadurch gekennzeichnet, daß die Auswerteschaltung (44) weiter derart mit dem Kennfeld (40) verbunden ist, daß auch der Auswerteschaltung (44) das vom Kennfeld (40) zur Ansteuerung der Endstufe (41) abgegebene Ansteuersignal (43) zuleitbar ist und zwar derart, daß die Auswerteschaltung (44) vorzugsweise lediglich während eines vorgebbaren Zeitfensters (Zeitinvertall) aktivierbar ist.

12. Schaltungsanordnung nach einem der Ansprüche 7 und 9, gekennzeichnet durch einen ersten Filter (F1), der lediglich die Anstiegsflanke des Ansteuerimpulses (43) für das elektromagnetische Ventil (42) zum Nullsetzen an zwei Schmitt-Trigger (TR1, TR2) sowie zwei Zähler (Z1, Z2) leitet und einen zweiten Filter (F2), der lediglich die Abstiegsflanke des Ansteuerimpulses (43) zu einer ersten bistabilen Kippstufe (K1) lietet, deren Ausgangssignal einerseits über einen Schalter (S2) die Resterregungsspannung ($u_R$) an das elektromagnetische Ventil (42) legt, andererseits den ersten Zähler (Z2) — zur Ermittlung der Zeit ($t_A$) — und mittelbar über die zweite bistabile Kippstufe (K2) den ersten Zähler (Z1) — zur Ermitt — lung der Zeit ($t_{TA}$) — startet und schließlich nach Zeitverzögerung (Totzeit $t_{T1}$) über einen Schalter (S3) die differenzierten Strom- werte des elektromagnetischen Ventils (42) je einem ersten Schwell- wertschalter (SW1) und einem zweiten Schwellwertschalter (SW2) zuleitet, denen je ein Schmitt-Trigger (TR1) bzw. (TR2) nachge- schaltet ist, deren Ausgangssignale die erste bistabile Kippstufe (K1) bzw. die zweite bistabile Kippstufe (K2) zurücksetzen.

13. Schaltungsanordnung nach einem der Ansprüche 7 und 9, gekennzeichnet durch je eine Filterschaltung (F1) bzw. (F2) zur Abtrennung der Anstiegs- bzw. Abstiegsflanke des Ansteuerungsimpulses (43) zur Ansteuerung des elektromagnetischen Ventils (42), durch je einen Schmitt-Trigger (TR2) und einen Zähler (Z2), denen zum Nullsetzen die von Filter (F1) abgetrennte Anstiegsflanke des Ansteuerimpulses (43) zugeleitet wird, sowie eine von der Abstiegsflanke des Ansteuerimpulses (43) über Filter (F2) beaufschlagte bistabile Kippstufe (K1), die zeitverzögert (Totzeit $t_{T2}$) einerseits das elektromagnetische Ventil (42) über einen Schalter (S2) mit der Rester- regungsspannung ($u_R$) und andererseits durch Betätigung eines weiteren Schalters (S3) einen vom Schmitt-Trigger (TR2) gefolgten Schwell- wertschalter (SW2) mit dem differenzierten Strom des Ansteurungsstroms des elektromagnetischen Ventils (42) beaufschlagt, wobei das Ausgangssignal des Schmitt-Triggers (TR2) zwecks deren Rücksetzung an den Rücksetzeingang der bistabilen Kippstufe (k1) zurückgeführt ist.

14. Schaltungsanordnung nach einem der Ansprüche 7 und 9, dadurch gekennzeichnet, daß zur Ansteuerung des elektromagnetischen Ventils (42) drei Spannungsquellen mit den Spannungswerten ($u_H$, $u_{R1}$, $u_{R2}$) vorgesehen sind, wobei die erste Spannungsquelle (Spannungswert $u_H$) unmittelbar durch den Ansteuerimpuls (43) und für dessen Dauer über einen ersten Schalter (S1) an das elektromagnetische Ventil (42) legbar ist, während zur Verbindung des elektromagnetischen Ventils (43) mit der zweiten Spannungs- quelle (Spannungswert $u_{R1}$) eine von der Abstiegsflanke des Ansteuerimpulses (43) betätigbare einen zweiten Schalter (S2) schließende bistabile kipp- stufe (K1) vorgesehen ist und wobei zur Anschaltung des elektro- magnetischen Ventils (42) an die dritte Spannungsquelle (Span- nungs- wert $u_{R2}$) über einen dritten Schalter (S4) eine weitere bistabile Kippstufe (K3) vorgesehen ist, die nach Rückstellung der ersten bistabilen Kippstufe (K1) durch ein Ausgangssignal des auf den Schwellwertschalter (SW1) folgenden Schmitt-Triggers (TR1) durch das gleiche jedoch zeitverzögert (Verzögerungszeit $t_{T3}$) zugeführte Signal gesetzt wird und dabei den Schalter (S4) schließt.

## Revendications

1. Procédé de régulation d'un dispositif électromagnétique (18, 20; 42) qui est excité var un courant d'excitation (i) à l'état fermé alors que ce dispositif est coupé du courant à l'état ouvert, et vartant d'une valeur élevée correspondant à l'intensité du courant de maintien ($i_H$), le courant d'excitation (i) est diminué à l'intérieur de la période de l'intervalle de temps prévue pour l'ouverture du dispositif, et qui englobe la fin de l'ouverture, procédé selon lequel on détecte l'intensité d'excitation (i) ou un signal dépendant de cette intensité d'excitation (i) et on compare cette valeur à une valeur réelle caractérisant la fin de l'ouverture pour obtenir un signal résiduel, procédé caractérisé en ce que intensité du courant d'excitation (i) est abaissée à l'intérieur de la durée de l'intervalle de temps prédéterminé, au moins pendant la fin de l'ouverture ($t_E$) jusqu'à une valeur inférieure au niveau du courant de maintien, valeur qui est néanmoins positive.

2. Procédé selon la revendication 1 comportant une soupape constituée par une aiguille d'injec- teur d'un moteur à combustion interne formant ainsi le dispositif électromagnétique, procédé caractérisé en ce que l'intensité du courant d'excitation (i) de la soupape d'electromagnétique (18, 20; 42) est abaissée pendant la durée d'un temps de coupure ($t_{TA}$) a une valeur plus faible ($i_R$) et le temps mort de coupure représente l'intervalle de temps compris entre le flanc de l'impulsion de coupure et le début de l'ouverture de l'aiguille de l'injecteur.

3. Procédé de régulation d'un dispositif électromagnétique excité à l'état fermé par un courant d'excitation (i) et qui est coupé du courant à l'état ouvert, procédé selon lequel on fait diminuer le courant d'excitation (i) à partir d'une valeur élevée correspondant au courant de maintien ($i_H$) pendant la durée d'un intervalle de temps prévu pour l'ouverture du dispositif, durée qui englobe la fin de l'ouverture, pour atteindre zéro, avec détection du courant d'excitation (i) ou d'un signal dépendant de ce courant d'excitation (i) pour comparer ce signal à une valeur réelle caractérisant la fin de l'ouverture pour obtenir un signal de régulation, procédé caractérisé en ce que le courant d'excitation (i) est augmenté à l'intérieur de la durée de l'intervalle de temps prédéterminé, au moins pendant la fin de l'ouverture ($t_E$) pour arriver de nouveau à une valeur de courant d'excitation ($iR$) positive, plus élevée, mais néanmoins inférieure au courant de maintien ($iH$).

4. Procédé selon l'une des revendications 1 et 2, caractérisé en ce que partant du niveau du courant de maintien ($iH$) on abaisse tout d'abord le courant d'excitation (i) à une valeur positive faible ($iR$) et au cours d'un second intervalle on le maintient essentiellement à ce niveau puis on l'abaisse et au cours d'un quatrième intervalle on relève de nouveau le courant à une valeur positive inférieure au niveau du courant de maintien ($iH$).

5. Procédé selon l'une des revendications 1 à 4 dans le cas d'un dispositif électromagnétique constitué par l'aiguille d'injecteur formant la soupape, dans un moteur à combustion interne, procédé caractérisé en ce que les valeurs intensité et/ou tension (i, U) combinées à des points caractéristiques de la courbe de déplacement (w=w (t)) de l'aiguille (18) se présentant lorsqu'on commande la soupape électromagnétique (18, 20; 42) à l'aide d'un étage de sortie (41) sont transmis à un circuit d'exploitation (44) qui détermine à partir des valeurs d'intensité et/ou de tension (i, U) qui lui sont fournies, des points caractéristiques de la courbe (w=w (t)) de la trajectoire de l'aiguille (18) et fournit les grandeurs ainsi déterminées à un champ de caractéristiques (40) pour êtra comparées à des grandeurs de consigne mises en mémoire dans celui-ci.

6. Circuit pour la mise en oeuvre du procédé selon l'une des revendications 1 et 2 comportant un dispositif électromagnétique avec des moyens pour alimenter le dispositif avec un courant d'excitation, le dispositif étant excité par un courant d'excitation (i) lorsqu'il est fermé alors qu'il est coupé du courant lorsqu'il est ouvert, le courant d'excitation (i) étant diminué à partir d'une valeur élevée correspondant à un courant de maintien (iH), pendant la durée d'un intervalle de temps prévu pour l'ouverture du dispositif, intervalle qui englobe également le fin de l'ouverture, avec des moyens pour détecter le courant d'excitation et des moyens de régulation, des moyens de comparaison pour comparer le courant d'excitation et une valeur de courant caractérisant la fin de l'ouverture du dispositif, circuit caractérisé en ce qu'il comprend des moyens pour abaisser au moins provisoirement le courant d'excitation (i) pendant l'intervalle de temps prédéterminé, au moins pendant la fin de l'ouverture ($t_E$) jusqu'à une valeur située en-dessous du niveau du courant de maintien (iH), mais qui reste positive.

7. Circuit selon la revendication 6, caractérisé en ce que le dispositif électromagnétique ets un injecteur à aiguille d'un moteur à combustion interne.

8. Circuit pour la mise en oeuvre du procédé selon l'une des revendications 3 à 5 comportant un dispositif électromagnétique avec des moyens pour alimenter ce dispositif avec un courant d'excitation, le dispositif étant excité par un courant d'excitation (i) lorsqu'il est à l'état fermé alors qu'il est coupé du courant à l'état ouvert, le courant d'excitation (i) étant diminué à partir d'une valeur élevée correspondant au courant de maintien (iH) pendant la durée d'un intervalle de temps prévu pour l'ouverture du dispositif, intervalle qui englobe également la fin de l'ouverture, et des moyens pour détecter le courant d'excitation ainsi que des moyens de régulation et des moyens de comparaison pour comparer le courant d'excitation à une valeur de courant qui caractérisé la fin de l'ouverture du dispositif, le circuit comprenant des moyens pour diminuer le courant d'excitation (i), circuit caractérisé en ce qu'il comporte des moyens pour augmenter le courant d'excitation (i) pendant l'intervalle de temps prévu, au moins pendant la fin de l'ouverture ($t_E$) pour arriver à une valeur de courant d'excitation ($i_R$) située en-dessous du niveau du courant de maintien (iH).

9. Circuit selon la revendication 8, caractérisé en ce que le dispositif électromagnétique est un injecteur à aiguille d'un moteur à combustion interne.

10. Circuit selon l'une des revendications 7 ou 9, caractérisé en ce qu'il comprend un champ de caractéristique (40) dans lequel sont enregistrées des valeurs de consigne prédéterminées de points caractéristiques de la courbe de trajectoire (w=w (t)) de l'aiguille (18) de la soupape (injecteur) électromagnétique (18, 20; 42) et qui, en fonction des grandeurs caractéristiques ($n_M$, α) du moteur à combustion interne, émet un signal de commande (43) fourni à un étage de sortie (41) excitant la soupape électromagnétique (18, 20; 42) et un circuit d'exploitation (44) qui détecte les valeurs du courant et/ou la tension (i, U) d'excitation ou de coupure d'excitation de la soupape électromagnétique (18, 20; 42) pour en fournir des grandeurs caractéristiques de la courbe de trajectoire de l'aiguille d'injecteur (18) et les fournir au champ de caractéristiques en vue de la comparaison avec les grandeurs de consigne mises en mémoire dans ce champ.

11. Circuit selon la revendication 10, caractérisé en ce que le circuit d'exploitation (44) est un outre relié au champ de caractéristiques (40) pour que le circuit d'exploitation (44) reçoive également le signal de commande (43) fourni par le champ de caractéristiques (40) pour commander l'étage de sortie (41) et cela de façon que le circuit d'exploitation (44) soit mis en oeuvre de préférence seulement pendant une fenêtre de temps prédéterminée (intervalle de temps).

12. Circuit selon l'une des revendications 7 et 9, caractérisé par un premier filtre (F1) qui transmet uniquement le flanc montant de l'impulsion de commande (43) de la soupape électromagnétique (42) pour remettre à zéro deux déclencheurs de Schmitt (TR1, TR2) ainsi que deux compteurs (Z1, Z2) ainsi qu'in second filtre (F2) qui reçoit uniquement le flanc descendant de l'impulsion de commande (43) pour la transmettre à une première bascule bistable (K1) dont le signal de sortie est appliqué d'une part par un interrupteur (S2) à la soupape électromagnétique (42) comme tension d'excitation résiduelle ($u_R$) et d'autre part au premier compteur (Z2) pour déterminer le temps ($t_A$) et directement par le seconde bascule bistable (K2) vers le premier compteur (Z1) pour déterminer le temps ($t_{TA}$), et enfin après temporisation (temps mort $t_{T1}$) par un interrupteur (S3), les valeurs différentiées de l'intensité de la soupape électromagnétique (42) sont transmises chaque fois à un premier interrupteur à seuil (SW1) et à un second interrupteur à seuil (SW2) suivis chaque fois d'un déclencheur de Schmitt (TR1, TR2) dont les signaux de sortie remettent à l'état initial la première bascule bistable (K1) et la seconde bascule bistable (K2).

13. Circuit selon l'une des revendications 7 et 9, caractérisé par chaque fois un filtre (F1, F2) pour séparer le flanc montant et le flanc descendant de l'impulsion de commande (43) attaquant la soupape électromagnétique (42), un déclencheur de Schmitt (TR2) et un compteur (Z2) qui, pour la remise à l'état initial, reçoivent le flanc montant séparé par le filtre (F1) de l'impulsion de commande (43) ainsi qu'une bascule bistable (K1) fournie par le filtre (F2) à partir du flanc descendant de l'impulsion de commande (K1), cette bascule alimentant avec retard (temps mort $t_{T2}$) d'une part la soupape électromagnétique (42) par l'intermédiaire d'un interrupteur (S2) pour lui fournir la tension d'excitation résiduelle ($u_R$) et d'autre part par actionnement d'un second interrupteur (S3), un interrupteur à seuil (SW2) suivi par le déclencheur de Schmitt (TR2) pour lui fournir le courant différentié du courant de commande de la soupape électromagnétique (42), le signal de sortie du déclencheur de Schmitt (TR2) étant reconduit à l'entrée de remise à l'état initial de la bascule bistable (K1) pour remettre celle-ci à son état initial.

14. Circuit selon l'une des revendications 7 et 9, caractérisé par trois sources de tension avec des valeurs de tension ($u_H$, $u_{R1}$, $u_{R2}$) pour commander la soupape électromagnétique (42), la première source de tension (tension $u_H$) étant reliée directement à la soupape électromagnétique (42) par l'impulsion de commande (43) et pendant la durée de cette impulsion par l'intermédiaire d'un premier interrupteur (S1) alors que pour relier la soupape électromagnétique (42) à la seconde source de tension (valeur de tension $u_{R1}$), il est prévu une bascule bistable (K1) qui ferme un second interrupteur (S1) en étant mise en oeuvre par le flanc descendant de l'impulsion de commande (43), et pour relier la soupape électromagnétique (42) à la troisième source de tension (tension $u_{R2}$) il est prévu une autre bascule bistable (K3) par l'intermédiaire d'une troisième interrupteur (S4), cette dernière bascule étant mise à l'état et fermant ainsi l'interrupteur (S4) après la remise à l'état initial de la première bascule bistable (K1) par un signal de sortie du déclencheur de Schmitt (TR1) en aval de l'interrupteur à seuil (SW1), le signal de mise à l'état étant toutefois retardé (retard $t_{T3}$).

## Claims

1. Process for controlling an electromagnetic device (18, 20; 42) which is excited in the closed state by an excitation current (i) and is currentless in the open state, with which the excitation current (i), starting from a high value corresponding to the holding current (iH), is reduced during a time period which is provided for the opening of the device, said time period also comprising the end of the opening, with which the excitation current (i) or a signal dependent on this excitation current (i) is measured and compared with an actual value characterizing the end of opening for the purpose of obtaining a control signal, characterized in that the excitation current (i) is reduced during the time period provided at least during the end of opening ($t_E$) to a lower, but still positive value lying below the holding current level.

2. Method according to Claim 1, having a valve, comprising a valve needle of an internal combustion engine as electromagnetic device, characterized in that the excitation current (i) of the electromagnetic valve (18, 20; 42) is reduced to a lower value (iR) for the duration of a switch-off dead time (tTA), the switch-off dead time being defined as the time period between the switch-off pulse edge and the start of opening of the valve needle of the valve.

3. Method for controlling an electromagnetic device which is excited in the closed state by an excitation current (i) and is currentless in the open state, in which device the excitation current (i) is reduced to zero, starting from a high value corresponding to the holding current (iH), within the duration of a time period provided for the opening of the device, said time period also comprising the end of the opening, in which device the excitation current (i) or a signal dependent on this excitation current (i) is measured and compared with an actual value characterizing the end of opening for the purpose of obtaining a control signal, characterized in that the excitation current (i) is raised again during the time period provided at least during the end of the opening ($t_E$) to a higher, positive current value (IR), but still lying below the holding current (iH).

4. Method according to one of Claims 1 and 2, characterized in that the excitation current (i) is reduced, starting from the level of the holding current (iH), firstly to a low positive value (iR), and in a second time period is essentially held at this level, then reduced and, during a fourth time period, raised again to a positive value lying below the holding current level (iH).

5. Method according to one of Claims 1 to 4, having a valve, comprising a valve needle, of an internal combustion engine as electromagnetic device, characterized in that the current and/or voltage means (i, U) associated with characteristic points of the movement curve (w=w (t)) of the valve needle (18) and occurring when the electromagnetic valve (18, 20; 42) is actuated by means of a final output stage (41) are fed to an evaluation circuit (44) which determines characteristic points of the travel curve (w=w (t)) of the valve needle (18) from the current and/or voltage means (i, U) supplied to it and feeds the determined values to a characteristic diagram (40) for comparision with reference values stored there.

6. Circuit arrangement for carrying out the method according to one of Claims 1 to 2, having an electromagnetic device with means for supplying the device with an excitation current, the device being excited in the closed state by an excitation current (i) and being currentless in the open state, and the excitation current (i) being reduced, starting from a high value corresponding to the holding current (iH), during a time period provided for the opening of the device, said time period also comprising the end of the opening, having means for measuring the excitation current and control means, having comparison means for comparing the excitation current with a current value characterizing the end of opening of the device, characterized in that the circuit arrangement comprises means for at least temporarily reducing the excitation current (i) during the time period provided at least during the end of the opening ($t_E$) to a lower, but still positive, value lying below the holding current level (iH).

7. Circuit arrangement according to Claim 6, characterized in that as electromagnetic device a valve, comprising a valve needle, of an internal combustion engine is provided.

8. Circuit arrangement for carrying out the method according to one of Claims 3 to 5, having an electromagnetic device with means for supplying the device with an excitation current, the device being excited in the closed state by an excitation current (i) and being currentless in the open state and the excitation current (i) being reduced, starting from a high value corresponding to the holding current (iH), during a time period provided for the opening of the device, said time period also comprising the end of the opening, having means for measuring the excitation current and control means, having comparison means for comparing the excitation current with a current value characterizing the end of opening of the device, the circuit arrangement comprising means for reducing the excitation current (i), characterized in that said device comprises means for raising the excitation current (i) during the time period provided at least during the end of the opening ($t_E$) to an excitation current value (iR) lying below the holding current level (iH).

9. Circuit arrangement according to Claim 8, characterized in that as electromagnetic device a valve, comprising a valve needle, is provided in an internal combustion engine.

10. Circuit arrangement according to one of Claims 7 or 9, characterized in that it comprises a characteristic diagram (40) in which predetermined reference values of characteristic points of the travel curve (w=w (t)) of the valve needle (18) of the electromagnetic valve (18, 20; 42) are stored and which issues an actuation signal (43) as a function of measured operating variables ($n_M$, a) of the internal combustion engine, said actuation signal being fed to a final output stage (41) which excites the electromagnetic valve (18, 20; 42), and in that an evaluation circuit (44) is provided which measures current and/or voltage values (i, U) occurring on excitation or de-excitation of the electromagnetic valve (18, 20; 42), determines from these characteristic values of the travel curve of the valve needle (18) and feeds these to the characteristic diagram (40) for the purpose of comparison with the stored reference values.

11. Circuit arrangement according to Claim 10, characterized in that the evaluation circuit (44) is also connected to the characteristic diagram (40) in such a way that the actuation signal (43) issued by the characteristic diagram (40) for actuating the final output stage (41) can also be fed to the evaluation circuit (44) and, to be precise, in such a way that the evaluation circuit (44) can be activated preferably solely during a predeterminable time window (time interval).

12. Circuit arrangement according to one of Claims 7 and 9, characterized by a first filter (F1) which only conducts the rising edge of the actuation pulse (43) for the electromagnetic valve (42) for the purpose of setting to zero at two Schmitt triggers (TR1, TR2) as well as two counters (Z1, Z2) and by a second filter (F2) which only conducts the trailing edge of the actuation pulse (43) to a first bistable flip-flop (K1), the output signal of which on the one hand applies the residual excitation voltage ($u_R$) to the electromagnetic valve (42) via a switch (S2), on the other hand starts the first (sic) counter (Z2) — on order to determine the time ($t_A$) — and starts the first counter (Z1) indirectly via the second bistable flip-flop (K2) — in order to determine the time ($t_{TA}$) — and finally after a time delay (dead time $t_{T1}$) feeds the differentiated current values of the electromagnetic valve (42) via a switch (S3) in each case to a first threshold value switch (SW1) and a second threshold value switch (SW2), downstream of which there being connected in each case a Schmitt trigger (TR1) and (TR2) respectively, the output signals of which reset the first bistable flip-flop (K1) and the second bistable flip-flop (K2) respectively.

13. Circuit arrangement according to one of Claims 7 and 9, characterized in each case by a filter circuit (F1) and (F2) respectively for separating off the rising or trailing edge of the actuation pulse (43) for the purpose of actuating the electromagnetic valve (42), by means of in each case one Schmitt trigger (TR2) and a counter (Z2), to which the rising edge, separated off by (lacuna) filter (F1), of the actuation pulse (43) is fed for the purpose of setting to zero, as well as trailing a bistable flip-flop (K1) triggered by the edge of the actuation pulse (43) via filter (F2), said bistable flip-flop (K1) supplying after a time delay (dead time $t_{T2}$), on the one hand, the electromagnetic valve (42) with the residual excitation voltage ($u_R$) via a switch on the other hand, a threshold value switch (SW2) followed by the Schmitt trigger (TR2) with the differentiated current of the actuation current of the electromagnetic valve (42) by activating a further switch (S3), the output signal of the Schmitt trigger (TR2) being fed back to the reset input of the bistable flip-flop (K1) for the purpose of resetting it.

14. Circuit arrangement according to one of Claims 7 and 9, characterized in that, for the purpose of actuating the electromagnetic valve (42), three voltage sources with the voltage values ($u_H$, $u_{R1}$, $u_{R2}$) are provided, it being possible to apply the first voltage source (voltage value $u_H$) directly by means of the actuation pulse (43) and for the duration of said pulse to the electromagnetic valve (42) via a first switch (S1), whilst a bistable flip-flop (K1) which can be activated by the trailing edge of the actuation pulse (43) and which closes a second switch (S2) is provided for the purpose of connecting the electromagnetic valve (43) to the second voltage source (voltage value $u_{R1}$), and a further bistable flip-flop (K3) being provided for the purpose of connecting the electromagnetic valve (42) to the third voltage source (voltage value $u_{R2}$) via a third switch (S4), said further bistable flip-flop (K3) being set, after resetting of the first bistable flip-flop (K1) by an output signal of the Schmitt trigger (TR1) following the threshold value switch (SW1), by the same supplied signal, but with a time delay (delay time $t_{T3}$), and thereby closing the switch (S4).

## FIG.1

## FIG.4

# FIG. 2

# FIG. 3

# FIG. 5

# FIG. 6

3

FIG.7

FIG. 8

FIG. 9

EP 0 261 134 B1